# EUROPEAN PATENT SPECIFICATION

(11) **EP 2 491 626 B1**
(45) Date of publication and mention of the grant of the patent: **11.09.2013**
(21) Application number: 10776613.1
(22) Date of filing: 21.10.2010
(51) Int. Cl.: H01R 25/00, H01R 13/66, H01R 13/703, H02J 9/00, H04L 12/28

(54) **MULTIFUNCTIONAL ELECTRICITY OUTLET**
MULTIFUNKTIONS-STROMAUSGANG
SORTIE D'ÉLECTRICITÉ MULTIFONCTION

(30) Priority: 21.10.2009 DE 102009050173
(43) Date of publication of application: 29.08.2012
(73) Proprietor: MSR-Solutions GmbH, 88239 Wangen im Allgäu (DE); Diehl AKO Stiftung & Co. KG, 88239 Wangen (DE)
(72) Inventor: KAPS, Werner, 88171 Weiler (DE); SIMON, Helmut, 88260 Argenbühl (DE); LEONHARDT, Armin, 88239 Wangen (DE); ROTH, Christian, 88239 Wangen (DE)
(74) Representative: Leske, Thomas
(86) International application number: PCT/EP2010/065871
(87) International publication number: WO 2011/048182

(56) References cited:
- EP-A2- 2 073 321
- US-A1- 2008 019 067
- US-A1- 2008 231 121

## Description

The invention relates to a multifunctional electricity outlet for a building automation and building information system, and to a building automation and building information system having a multifunctional electricity outlet.

Various electricity outlets, in particular plug sockets, for building installation are known from the prior art. DE 10 2007 063 591 A1 discloses an installation device, in particular an electrical plug socket, for building system technology. The electrical plug socket has a removable module in an appliance cap, by means of which module electrical parameters can be recorded and/or regulated in the electrical plug socket. The electrical plug socket communicates via the removable module with further appliances, in a wire-free manner.

US 2008/019067 A1 discloses a multifunctional electricity outlet for a building automation and building information system, the multifunctional electricity outlet having: a first interface to an electricity supply; a second interface to an electrical load; an apparatus for measurement of at least one electrical variable; a memory for the at least one measured electrical variable; a control module; and a third interface for transmission and reception of data.

The object of the present invention is to provide an electricity outlet for building technology, which is included in a building automation and building information system and by means of which additional information about the connected load can be recorded.

The object is achieved by a multifunctional electricity outlet for a building automation and building information system having the features of patent claim 1, and by a building automation and building information system having the features as claimed in patent claim 11. Further preferred developments are specified in the respective dependent claims.

A multifunctional electricity outlet according to the invention for a building automation and building information system is connected via a first interface to a power supply line which, for example, is a component of a building electrical mains system. In this case, depending on the region, different electrical mains systems are considered to be building electrical mains systems, for example 230 V electrical mains systems in Western Europe, 110 V electrical mains systems in the United States of America, or else DC voltage mains systems. The multifunctional electricity outlet furthermore has a further, second interface, via which an electrical connection can be made to an electrical load. A normal plug/plug socket combination for electrical loads can be used, for example, for this purpose. However, it is also possible to connect the electrical load via a plug, terminal or soldered connection. By way of example, domestic appliances, electrical appliances, lighting devices and any electrical loads which can be connected to the building electrical mains system can be considered to be electrical loads.

Furthermore, the multifunctional electricity outlet has an apparatus for measurement of at least one electrical variable. The electrical current level is preferably measured via the apparatus. The electrical power can be determined from the measured current level in conjunction with the applied voltage. Furthermore, the electrical voltage is preferably likewise measured via the apparatus for measurement of electrical variables. However, it is also possible, for example, to assume that the root mean square value of the electrical voltage is constant.

The multifunctional electricity outlet according to the invention furthermore has a data memory module in which the value of the at least one measured electrical variable can be stored. In this case, in particular, volatile memory such as RAM, semi-permanent memory such as EPROM or permanent memory such as ROM may be regarded as memory. By way of example, at predetermined times or time steps, the absolute values of the electrical variable measured at this time, or the change in the variable from the previous value, can be stored in the data memory. In addition, the price determined from this and the total cost can also be formed and stored in conjunction with electricity tariffs, which can likewise be stored in the memory module. The time difference between two stored values can in this case be defined, and also varied, as required. It is therefore possible to store a new value only when the value of the electrical variable changes by a predetermined factor or absolute value. On the basis of the electrical variables stored in the memory, a control module of the multifunctional electricity outlet can preferably produce a profile of at least one of the electrical variables, for example over time. The control module is preferably a microchip. However, it is also possible to produce other types of profiles, in particular those which are suitable for identifying an electrical load via its profile. When profiles over time are used, the time period for which the profile is produced is fully variable. By way of example, a current-time profile or a power-time profile can be produced for a switching-on process or for a complete operating cycle.

Furthermore, the control module for the multifunctional electricity outlet has means for comparison of the profile over time with predetermined stored profiles of loads, which can be connected, over time. These means are preferably integrated in the microchip. The predetermined profiles are preferably profiles which are suitable for identifying an electrical load. This predetermined profile is, for example, linked to a type of load, such as a washing machine or even to a specific model or model range of a manufacturer. By way of example, such profiles are provided by the manufacturers of the electrical loads or by the manufacturer of the building automation and building information system. It is also possible to manually associate a measured profile, which has not previously been stored as a predetermined profile, with a load. In this case, the profiles are preferably configured such that they have a common base. This means that, for example, they all represent the switching-on process or a complete cycle from the load being switched on to being switched off. These predetermined profiles over time are stored in the memory of the multifunctional electricity outlet, at least during the adjustment process. For this purpose, by way of example, the predetermined profiles can be called up via a third interface, a communications interface, from an external database. The switching-on profiles of loads are preferably used for the comparison. The comparison can therefore be carried out only a short time after the load has been switched on. However, it is also possible to compare the profile only after the load has been switched off. The connected load is determined via the comparison of the measured profile with predetermined profiles.

The multifunctional electricity outlet can be connected to further components via the communication interface. These components are preferably components by means of which the multifunctional electricity outlet forms a system for building automation, in particular a building automation and building information system. A building automation and building information system such as this is described, for example, in the parallel patent application from the applicant with the same priority. The communication interface is in this case preferably in the form of a radio interface. The low-power Standards with low energy consumption, such as ZigBee or EnOcean Dolphin, are preferably used as a radio Standard. For example, multifunctional electricity outlets can communicate with one another via these radio signals or, for example, a switch for switching the multifunctional electricity outlet can communicate with the corresponding multifunctional electricity outlet. In this case, one or more functional electricity outlets as well as further components of the building automation and building information system can also be functionally associated with a control unit which represents a superordinate level in the system architecture of the building automation and building information system.

The communication between the multifunctional electricity outlet and the control unit can also take place by using lines. Lines of the electrical mains system are preferably used as the communication medium. The first and the third interfaces are therefore in the form of one interface. By way of example, a 230 V mains line can be used for data communication, via suitable communication modules. In this case, it is particularly preferable to use data transmission based on the Powerline-Command-and-Control-Standard, which has the necessary robustness for data transmission. The use of the 230 V electrical mains system allows a system such as this to be installed without major installation effort. An embodiment such as this is particularly advantageous when a building automation and building information system such as this is installed in an already existing building. There is therefore no need to lay additional lines. It is also advantageous when using the 230 V electrical mains system that both the control units and the multifunctional electricity outlet together with the connected load can be supplied with electricity at the same time via the data lines. It is also possible for the multifunctional electricity outlet to have line-based and radio-based interfaces, for example for communication with different components of the building automation and building information system.

The multifunctional electricity outlet preferably has a relay or a semiconductor circuit for switching, open-loop control and/or closed-loop control of the electricity supply to the load which can be connected. The signal for this purpose is produced, for example, by an external unit or a control unit or input device on the multifunctional electricity outlet. This is preferably a key, in particular a capacitive key. By way of example, the load which can be connected to the multifunctional electricity outlet can be switched on and off via the key, or a connected lighting device can be dimmed. By way of example, a time-delayed switching process can also be activated via the input device. Furthermore preferably, the multifunctional electricity outlet has one or more indicating elements. By way of example, the indicating elements are in the form of LEDs. By way of example, the instantaneous electricity consumption of the connected load, or the instantaneous electricity prices in the case of time-dependent electricity tariffs, are indicated via LEDs of different color.

Furthermore preferably, the multifunctional electricity outlet has a device for calculation of consumption values. By way of example, the accumulated electricity consumption for a determinable time period, and therefore the total electricity consumption for this time period, are calculated on the basis of the measured electrical variables. By way of example, conclusions can be drawn from the absolute electricity consumption of a plug socket about the consumption behavior as well as the electricity costs for the loads which are connected to the multifunctional electricity outlet. This consumption data may be called up, for example, via the communication interface. The multifunctional electricity outlet can therefore be used as an electricity meter, for example for consumption cost billing.

The multifunctional electricity outlet is preferably in the form of an electrical plug socket. In this case, an electrical plug socket can preferably be installed, in particular, in a conventional flushmounted socket in the wall of a building. However, it is also possible for the multifunctional electricity outlet to be designed as an attachment for an electrical plug socket, or integrally with an electrical load.

A further aspect of the invention relates to a building automation and building information system which, in one embodiment, has a multifunctional electricity outlet according to the invention and a control unit. The associated multifunctional electricity outlet can, for example, be switched remotely, subjected to open-loop or closed-loop control remotely, can be remotely dimmed and/or can be remotely monitored via the control unit. A function such as this is preferably carried out as a function of time, a nominal value or the user, and this can be stored via various profiles in the control unit. One particular version of this functionality is automatic load shedding of loads by an external unit. By way of example, an energy supply company has the capability, for example, to individually switch off high-energy loads, which are not required for the basic supply, when there is a threat of the electrical mains system being overloaded, leading to the electrical mains system collapsing. Such disconnection of loads which are not necessary for the basic supply can, for example, also be carried out if the electricity costs have not been paid.

The control unit preferably has an input and output appliance as a user interface. By way of example, a user interface such as this is a touch-sensitive touch pad with a plurality of keys, a so-called multiple touch pad. Individual keys or areas of the touch pad are in this case associated with specific functions. Furthermore, the user interface is preferably in the form of a touch-sensitive display. Graphics user interfaces can additionally be displayed on a display. By way of example, the functions of the multifunctional electricity outlet can be displayed in a stylized or generic form via the touch-sensitive display. The graphics display is changed, for example, by means of a menu for the touch-sensitive display. Furthermore, settings such as the parameters of the individual profiles can be changed. Various functions of the multifunctional electricity outlet can therefore be activated, deactivated or programmed via the touch-sensitive display. The settings are stored in the control unit, and are implemented by it.

Furthermore, state data or a history of data is displayed by the input and output device of the control unit. Consumptions of the connected loads are preferably called up via the control unit for the building automation and building information system. For example, the instantaneous consumption, the total consumption or the consumption in a specific time period is thus indicated. Furthermore, the consumptions which are drawn at a multifunctional electricity outlet or at a plurality of multifunctional electricity outlets which are combined to form a group, are indicated. A consumption behavior such as this can preferably be displayed as a consumption profile over time. By way of example, the consumptions can also be displayed comparatively as bar charts over several hours, days, weeks, months and/or years.

It is also possible to use an Internet link to connect the building automation and building information system to external services. The service providers are, for example, manufacturers of electrical loads or of the building automation and building information system, and provide predetermined profiles. Furthermore, this may relate to energy supply companies who provide, for example, the time-dependent electricity tariffs for calculation and indication of the energy costs and for cost-optimized control or switching of loads, or to which consumption data is transmitted in order to calculate a predicted electricity consumption. However, it is also possible to program in the time-dependent electricity prices, for example via an input apparatus for the control unit.

The multifunctional electricity outlet preferably receives predetermined profiles of loads, which can be connected, over time by means of the communication interface from, for example, a database in the building automation and building information system. By way of example, a database such as this is arranged at a central (control) unit in the building automation and building information system. The predetermined profiles through the multifunctional electricity outlet are therefore preferably stored temporarily in the memory only during the comparison process. If a measured profile does not correspond to one of the stored predetermined profiles, then the profile is associated with a new load, for example, via an input and output device in the building automation and building information system, as a result of which this profile becomes a predetermined profile.

Alternatively, the comparison with predetermined profiles can also be carried out after the switching-off process. Therefore, although the load is identified only after an operating cycle, it is, however, possible, to store the identification of the load in the memory of the multifunctional electricity outlet, as a result of which the load is known for future cycles. By way of example, this load is stored as being connected until it is mechanically disconnected, and this is detected by the control module by means for measurement of electrical variables.

An enabling means for a switching-on process of the load can be displayed via the control element for switching and control of the electricity supply to the load. If the electricity consumption at a multifunctional electricity outlet exceeds a predefined threshold value which, for example, is above the standby consumption of the load, a profile is produced after a predetermined time period as a switch-on profile, by means of which a comparison is carried out with predetermined profiles. After determining the connected load, if this is defined for the load in this way, the electricity supply is switched off. The electricity supply to the load is not switched on again until the user has enabled the switching-on process via the control element of the multifunctional electricity outlet or the control unit, which now acts as an enabling means. Such enabling means for the switching-on process are furthermore preferably arranged at the control unit. By way of example, the enabling means is the touch-sensitive control unit display. The instantaneous electricity price can be displayed to the user as a decision aid for enabling the switching-on process, preferably on the display element of the multifunctional electricity outlet, or the control unit.

Furthermore, the enabling means can preferably activate a time-delayed switching-on process of the load. The time delay for the selection process is preferably freely variable by the user. The time for the time-delayed switching-on process is furthermore preferably calculated on the basis of the time-dependent electricity tariffs. By way of example, the consumption profile of the connected load for one operating cycle is used for this purpose. A switching-on process which has been delayed in time in this way can in this case be activated by the enabling means for the control unit and/or the enabling means for the multifunctional electricity outlet. The time for the time-delayed switching-on process can in this case be determined on the basis of the time-dependent electricity tariff, calculated both by the control module for the multifunctional electricity outlet and by the control unit for the building automation and building information system. If the cost-optimized switching-on time is calculated by the multifunctional electricity outlet, then the time-dependent electricity prices are sent via the communication interface, for example from the control unit to the multifunctional electricity outlet. The time-dependent electricity prices are stored in the memory module of the multifunctional electricity outlet.

Both the multifunctional electricity outlet and the control unit preferably have a plug-and-play capability. In this case, during integration into the system, the components transmit their function and, if appropriate, provide a so-called plug-in, by means of which they can be accessed by a superordinate control unit. The UPnP Standard is preferably used as the Plug-and-Play Standard.

Further features and advantages of the invention will become evident from the following exemplary embodiments in conjunction with the figures, in which:
- figure 1:: shows a systematic design of a multifunctional electricity outlet; and
- figure 2:: shows a block diagram of switching a load, which is connected to the multifunctional electricity outlet, as a function of the electricity tariff, in a building automation and building information system.

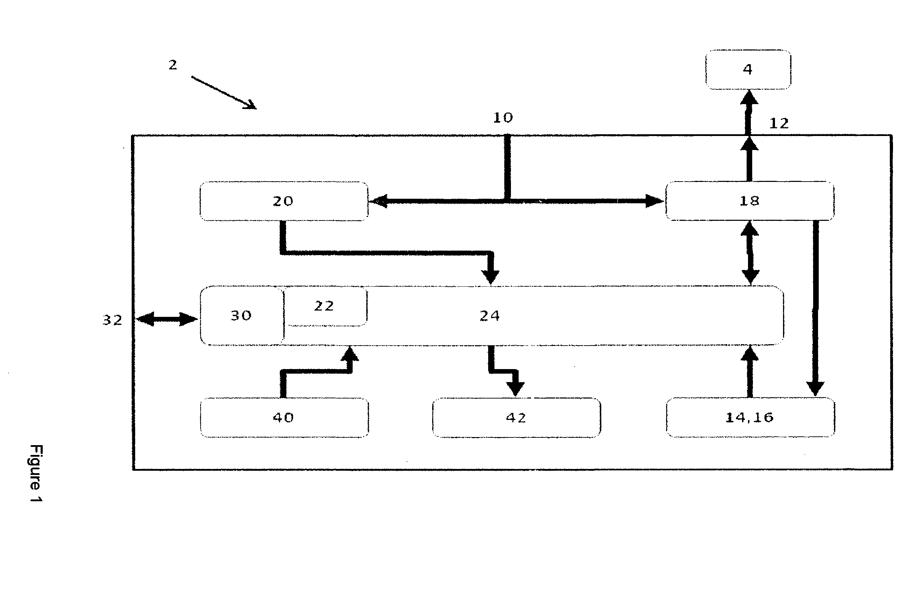

Figure 1 shows a schematic illustration of a multifunctional electricity outlet 2 according to the invention, with an electrical load 4 connected to it. The multifunctional electricity outlet 2 has an interface 10 to a power supply line. The energy provided by the interface 10 is made available on the one hand by an interface 12 to the electrical load 4. On the other hand, the multifunctional electricity outlet 2 is supplied with power by a power supply unit 20. The electricity supply to the electrical load 4 is dimmed and switched via a semiconductor circuit 18. The power supply unit 20 rectifies the alternating current and in this case transforms the 230 V applied to the interface 10 to a lower value, which is required by the multifunctional electricity outlet 2.

The multifunctional electricity outlet 2 furthermore has an EnOcean Dolphin communication module 30, providing an EnOcean Dolphin communication interface 32. The multifunctional electricity outlet 2 is connected to a control unit 34 (not illustrated) via the EnOcean Dolphin communication interface 32. The electricity supply to the load 4 can be switched and dimmed remotely via the semiconductor circuit 18, via the EnOcean Dolphin communication interface 32.

The power consumed by the electrical load 4 is determined by a sensor 14 for measurement of the current and by a sensor 16 for measurement of the voltage. Furthermore, the multifunctional electricity outlet 2 has a memory module 22 and a microprocessor 24. The electrical variables measured by the current and voltage sensors 14, 16 are stored in the memory module 22. The microprocessor 24 uses the electrical variables of current and voltage to calculate the power consumed by the load, and likewise stores this in the memory module 22. These variables, which are stored in the memory module 22, can be called up via the En-Ocean Dolphin communication module 30.

If the standby power consumption of the load is exceeded, the microprocessor 24 produces a profile of the calculated power over time for a predefined time period. Predetermined profiles over time for loads which can be connected are called up by the microprocessor 24 via the EnOcean Dolphin communication module 30, when a database is connected to the EnOcean Dolphin communication interface 32. For comparison of the power/time profile that is produced with the already known profiles, the already known profiles are stored in the memory module 22. The microprocessor 24 uses this comparison as the basis for determining the connected load 4.

Furthermore, the multifunctional electricity outlet 2 has an input device in the form of a capacitive key 40. The connected load 4 is switched on and off by operating the capacitive key 40 via the capacitive key 40, which represents a rectangular surface on the multifunctional electricity outlet 2. Furthermore, the connected load 4 can be dimmed continuously variably by moving the finger along the surface of the key 40.

Furthermore, the multifunctional electricity outlet 2 has an outlet device which consists of LEDs 42 of different color. The instantaneous power consumption of the load which is connected to the interface 12 is indicated via a green, a yellow, an orange and a red LED. The color green in this case represents a low electricity consumption, and the color red a high electricity consumption. If no current is being consumed, none of the LEDs 42 is illuminated. In this case, the LEDs 42 are controlled via the microprocessor 24.

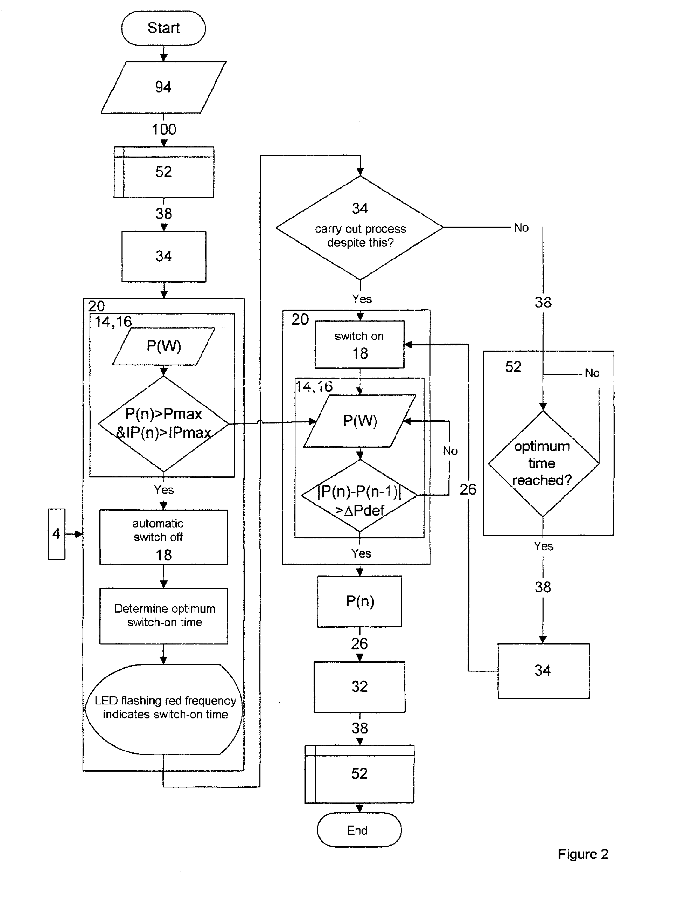

As shown in figure 2, a central unit 52 in a building automation and building information system receives time-dependent electricity profiles from an energy supply company 94 via an Internet link 100. The time-dependent electricity tariffs are stored in a database in a central unit 52, and are transmitted to a control unit 34 via a data line 38. The control unit 34 transmits the electricity tariffs to the multifunctional electricity outlet 2 via the communication interface 32. In addition to sensors 14, 16 for measurement of the current drawn and of the voltage applied, the multifunctional electricity outlet 2 contains the semiconductor circuit 18 for switching or dimming the connected load 4, the microprocessor 24 and the memory module 22 (cf. figure 1). The multifunctional electricity outlet 2 stores the electricity tariffs in the memory module 22. When the load 4 is being set up by a user the power consumed is measured by the sensors 14, 16 and the power as well as a power profile of the load 4 are stored in the memory module 22. If the predefined power threshold Pₘₐₓ for standby operation is exceeded, a switch-on profile is produced after a predetermined time, and this is compared with predetermined switch-on profiles of known loads, in order to determine the load 4. If, in addition, the electricity price IP(n) during operation of the load 4 is higher than a predefined threshold value IPₘₐₓ, the semiconductor circuit 18 disconnects the load 4 from the mains. The threshold value IPₘₐₓ is determined, for example, by multiplying the best electricity price by a predefinable factor greater than one.

The multifunctional electricity outlet 2 uses the already known current/time profile of the load 4 and the electricity tariffs as the basis for calculating a cost-optimized time for the process of switching on the load 4, and displays this switching-on time via a flashing frequency on the LEDs 42. In addition, the multifuntional electricity outlet 2 transmits the load type and the best switching-on time to the control unit 34. This is displayed in graphic form to the user on a touch-sensitive display of the control unit 34. Furthermore, the amount in EUROs which can be saved in the case of operation at the cost-optimized time in comparison to immediate operation is displayed to the user. The user can now choose whether the switching-on process should be continued or whether the load 4 should be operated at the optimum time. If operation of the load 4 in the cost-optimized time period is chosen, this is displayed on the touch-sensitive display. Alternatively, the time-delayed switching-on process can be activated or rejected on the multifunctional electricity outlet 2 itself, via the capacitive key 40. A signal with the switching-on time is then transmitted to the central unit 52. When the switching-on time is reached, a signal to switch on the load 4 is sent from the central unit 52 via the data line 38 to the control unit 34, and via the EnOcean Dolphin communication interface 32 further to the multifunctional electricity outlet 2. The semiconductor circuit 18 now connects the load 4 to the electrical mains system.

If the user chooses the "continue switching-on process" option on the touch-sensitive display or on the capacitive key 40 at the multifunctional electricity outlet 2, or there is no input on the touch-sensitive display within a predefined time period, then the control unit 34 sends a signal for switching on via the EnOcean Dolphin communication interface 32 to the multifunctional electricity outlet 2.

In order to determine the power consumed, the measured values of the sensors 14, 16 of the multifunctional electricity outlet 2 are transmitted via the EnOcean Dolphin communication interface 32 to the control unit 34 and by the data line 38 further to the central unit 52, where the consumption data is stored in the database.

### List of reference symbols

- 2: Multifunctional electricity outlet
- 4: Electrical load
- 10: Interface to the power supply line
- 12: Interface to the electrical load
- 14: Current sensor
- 16: Voltage sensor
- 18: Semiconductor circuit
- 20: Power supply unit
- 22: Memory module
- 24: Microprocessor
- 30: EnOcean Dolphin communication module
- 32: EnOcean Dolphin communication interface
- 34: Control unit
- 38: Data line
- 40: Capacitive switch
- 42: LEDs
- 52: Central unit
- 94: Energy supply company

## Claims

1. A multifunctional electricity outlet (2) for a building automation and building information system, the multifunctional electricity outlet having:a first interface (19) to an electricity supply; a second interface (12) to an electrical load (4);
- an apparatus (14, 16) for measurement of at least one electrical variable;
- a memory (22) for the at least one measured electrical variable;
- a control module (24) for producing a profile for at least one of the measured electrical variables over time and for comparison of the profile over time with predetermined stored profiles of loads which can be connected, over time, in order to determine the load (4) which is connected to the second interface (12); and
- a third interface (32) for transmission and reception of data.

2. The multifunctional electricity outlet (2) as claimed in claim 1, **characterized in that** the multifunctional electricity outlet (2) can be connected via the third interface (32) to a building automation and building information system in accordance with the plug-and-play standard.

3. The multifunctional electricity outlet (2) as claimed in claim 1 or 2, **characterized in that** the third interface (32) is in the form of a radio-based interface or of an interface based on an electricity supply line.

4. The multifunctional electricity outlet (2) as claimed in one of the preceding claims, **characterized in that** the electricity supply to the load (4) can be switched and can be subjected to open-loop and/or closed-loop control.

5. The multifunctional electricity outlet (2) as claimed in claim 4, **characterized in that** the electricity supply to the load (4) can be switched remotely and can be subjected to open-loop and/or closed-loop control remotely via the third interface (32) and/or has a control element (40) for switching, open-loop control or closed-loop control of the electricity supply to the load.

6. The multifunctional electricity outlet (2) as claimed in one of the preceding claims, **characterized in that** the current level can be measured via the apparatus (14, 16) for measurement of electrical variables.

7. The multifunctional electricity outlet (2) as claimed in claim 6, **characterized in that** the voltage can be measured via the apparatus (14,16) for measurement of electrical variables, in order to determine the electrical power.

8. The multifunctional electricity outlet (2) as claimed in one of the preceding claims, **characterized in that** the control module can calculate consumption values of the load (4) which is connected to the second interface (12), on the basis of the stored electrical variables.

9. The multifunctional electricity outlet (2) as claimed in one of the preceding claims, **characterized in that** the predetermined stored profiles of loads, which can be connected, over time, can be called up by the control module (24) via the third interface (32).

10. The multifunctional electricity outlet (2) as claimed in one of the preceding claims, **characterized in that** the multifunctional electricity outlet (2) is an electrical plug socket.

11. A building automation and building information system having:
- at least one multifunctional electricity outlet (2) as claimed in one of claims 1 to 10, and
- a control unit (34) for switching, open-loop control and/or closed-loop control, which is connected via a third interface (32) to the multifunctional electricity outlet (2).

12. The building automation and building information system as claimed in claim 11, **characterized in that** the control unit (34) has enabling means for a switching-on process of a load (4) which is connected to the multifunctional electricity outlet (2).

13. The building automation and building information system as claimed in claim 11 or 12, **characterized in that** the control unit (34) has enabling means for a time-delayed switching-on process of the load (4) which is connected to the multifunctional electricity outlet.

14. The building automation and building information system as claimed in claim 13, **characterized in that** the time for the time-delayed switching-on process of a load (4) can be calculated on the basis of time-dependent electricity tariffs.

15. The building automation and building information system as claimed in one of claims 12 to 14, **characterized in that** the enabling means have an input and output device (36) wherein the instantaneous or total consumption of the load (4) can be called up via the input and output device (36).

## Patentansprüche

1. Multifunktionaler Elektrizitätsanschluss (2) für ein Gebäudeautomatisierungs- und Gebäudeinformationssystem, wobei der multifunktionale Elektrizitätsanschluss Folgendes aufweist: eine erste Schnittstelle (19) zu einer Elektrizitätsversorgung; eine zweite Schnittstelle (12) zu einem elektrischen Verbraucher (4);
- eine Vorrichtung (14, 16) zum Messen wenigstens einer elektrischen Größe;
- einen Speicher (22) für die wenigstens eine gemessene elektrische Größe;
- ein Steuermodul (24) zum Erzeugen eines Profils für wenigstens eine der gemessenen elektrischen Größe im Zeitablauf und zum Vergleichen des Profils im Zeitablauf mit vorgegebenen gespeicherten Profilen im Zeitablauf von Verbrauchern, die verbunden werden können, um den Verbraucher (4), der mit der zweiten Schnittstelle (12) verbunden ist, zu bestimmen; und
- eine dritte Schnittstelle (32) zum Senden und Empfangen von Daten.

2. Multifunktionaler Elektrizitätsanschluss (2) nach Anspruch 1, **dadurch gekennzeichnet, dass** der multifunktionale Elektrizitätsanschluss (2) über eine dritte Schnittstelle (32) mit einem Gebäudeautomatisierungs- und Gebäudeinformationssystem gemäß dem Plug-and-Play-Standard verbunden werden kann.

3. Multifunktionaler Elektrizitätsanschluss (2) nach Anspruch 1 oder 2, **dadurch gekennzeichnet, dass** die dritte Schnittstelle (32) in der Form einer funkbasierten Schnittstelle oder einer Schnittstelle basierend auf einer Elektrizitätsversorgungsleitung ist.

4. Multifunktionaler Elektrizitätsanschluss (2) nach einem der vorhergehenden Ansprüche, **dadurch gekennzeichnet, dass** die Elektrizitätsversorgung zu dem Verbraucher (4) geschaltet werden kann und einer Steuerung bei offenen Wirkungskreis und/oder einer Regelung unterworfen sein kann.

5. Multifunktionaler Elektrizitätsanschluss (2) nach Anspruch 4, **dadurch gekennzeichnet, dass** die Elektrizitätsversorgung mit dem Verbraucher (4) über die dritte Schnittstelle (32) fernverbunden werden kann und einer Fernsteuerung bei offenen Wirkungskreis und/oder einer Regelung unterworfen sein kann und/oder ein Steuerelement (40) zum Schalten, Steuern bei offenem Wirkungskreis oder Regeln der Elektrizitätsversorgung des Verbrauchers aufweist.

6. Multifunktionaler Elektrizitätsanschluss (2) nach einem der vorhergehenden Ansprüche, **dadurch gekennzeichnet, dass** der Strompegel über die Vorrichtung (14, 16) zum Messung elektrischer Variablen gemessen werden kann.

7. Multifunktionaler Elektrizitätsanschluss (2) nach Anspruch 6, **dadurch gekennzeichnet, dass** die Spannung über die Vorrichtung (14, 16) zur Messung elektrischer Variablen gemessen werden kann, um die elektrische Leistung zu bestimmen.

8. Multifunktionaler Elektrizitätsanschluss (2) nach einem der vorhergehenden Ansprüche, **dadurch gekennzeichnet, dass** das Steuermodul Verbrauchswerte des Verbrauchers (4), der mit der zweiten Schnittstelle (12) verbunden ist, auf der Basis der gespeicherten elektrischen Variablen berechnen kann.

9. Multifunktionaler Elektrizitätsanschluss (2) nach einem der vorhergehenden Ansprüche, **dadurch gekennzeichnet, dass** die vorgegebenen gespeicherten Profile im Zeitablauf von Verbrauchern, die verbunden werden können, von dem Steuermodul (24) über die dritte Schnittstelle (32) abgerufen werden können.

10. Multifunktionaler Elektrizitätsanschluss (2) nach einem der vorhergehenden Ansprüche, **dadurch gekennzeichnet, dass** der multifunktionale Elektrizitätsanschluss (2) eine elektrische Steckerbuchse ist.

11. Gebäudeautomatisierungs- und Gebäudeinformationssystem, das Folgendes umfasst:
- wenigstens einen multifunktionalen Elektrizitätsanschluss (2) nach einem der Ansprüche 1 bis 10, und
- eine Steuereinheit (34) zum Schalten, Steuern bei offenem Wirkungskreis und/oder Regeln, die über eine dritte Schnittstelle (32) mit dem multifunktionalen Elektrizitätsanschluss (2) verbunden ist.

12. Gebäudeautomatisierungs- und Gebäudeinformationssystem nach Anspruch 11, **dadurch gekennzeichnet, dass** die Steuereinheit (34) Mittel zum Ermöglichen eines Einschaltprozesses eines Verbrauchers (4), der mit dem multifunktionalen Elektrizitätsanschluss (2) verbunden ist, aufweist.

13. Gebäudeautomatisierungs- und Gebäudeinformationssystem nach Anspruch 11 oder 12, **dadurch gekennzeichnet, dass** die Steuereinheit (34) Mittel zum Ermöglichen eines zeitverzögerten Einschaltprozesses des Verbrauchers (4), der mit dem multifunktionalen Elektrizitätsanschluss (2) verbunden ist, aufweist.

14. Gebäudeautomatisierungs- und Gebäudeinformationssystem nach Anspruch 13, **dadurch gekennzeichnet, dass** die Zeit für den zeitverzögerten Einschaltprozess eines Verbrauchers (4) auf der Basis zeitabhängiger Elektrizitätstarife berechnet werden kann.

15. Gebäudeautomatisierungs- und Gebäudeinformationssystem nach einem der Ansprüche 12 bis 14, **dadurch gekennzeichnet, dass** die Mittel zum Ermöglichen eine Eingabe- und Ausgabevorrichtung (36) aufweisen, wobei der augenblickliche oder gesamte Verbrauch des Verbrauchers (4) über die Eingabe- und Ausgabevorrichtung (36) abgerufen werden kann.

## Revendications

1. Prise électrique multifonction (2) pour un système d'automatisation des bâtiments et de gestion des bâtiments, la prise électrique multifonction comprenant : une première interface (19) avec une alimentation électrique ; une deuxième interface (12) avec une charge électrique (4) ;
- un appareil (14, 16) pour mesurer au moins une variable électrique ;
- une mémoire (22) pour ladite au moins une variable électrique mesurée ;
- un module de commande (24) pour produire un profil associé à au moins une des variables électriques mesurées au fil du temps et pour comparer le profil au fil du temps à des profils enregistrés préétablis de charges susceptibles d'être raccordées au fil du temps, dans le but d'établir la charge (4) qui est raccordée à la deuxième interface (12) ; et
- une troisième interface (32) pour transmettre et recevoir des données.

2. Prise électrique multifonction (2) selon la revendication 1, **caractérisée en ce qu'**elle est susceptible d'être raccordée par l'intermédiaire de la troisième interface (32) à un système d'automatisation des bâtiments et de gestion des bâtiments selon la norme plug-and-play.

3. Prise électrique multifonction (2) selon la revendication 1 ou 2, **caractérisée en ce que** la troisième interface (32) prend la forme d'une interface radio ou d'une interface basée sur une ligne d'alimentation électrique.

4. Prise électrique multifonction (2) selon l'une des revendications précédentes, **caractérisée en ce que** l'alimentation électrique de la charge (4) peut être commutée et peut faire l'objet d'une commande en boucle ouverte et/ou en boucle fermée.

5. Prise électrique multifonction (2) selon la revendication 4, **caractérisée en ce que** l'alimentation électrique de la charge (4) peut être commutée à distance et peut faire l'objet d'une commande à distance en boucle ouverte et/ou en boucle fermée par l'intermédiaire de la troisième interface (32) et/ou comprend un élément de commande (40) pour la commutation, la commande en boucle ouverte ou la commande en boucle fermée de l'alimentation électrique de la charge.

6. Prise électrique multifonction (2) selon l'une des revendications précédentes, **caractérisée en ce que** le niveau de courant peut être mesuré par l'intermédiaire de l'appareil (14, 16) pour mesurer des variables électriques.

7. Prise électrique multifonction (2) selon la revendication 6, **caractérisée en ce que** la tension peut être mesurée par l'intermédiaire de l'appareil (14, 16) pour mesurer des variables électriques dans le but d'établir la puissance électrique.

8. Prise électrique multifonction (2) selon l'une des revendications précédentes, **caractérisée en ce que** le module de commande peut calculer des valeurs de consommation de la charge (4) qui est raccordée à la deuxième interface (12) en fonction des variables électriques enregistrées.

9. Prise électrique multifonction (2) selon l'une des revendications précédentes, **caractérisée en ce que** les profils enregistrés préétablis de charges susceptibles d'être raccordées au fil du temps peuvent être appelés par le module de commande (24) par l'intermédiaire de la troisième interface (32).

10. Prise électrique multifonction (2) selon l'une des revendications précédentes, **caractérisée en ce qu'**il s'agit d'une prise pour fiche électrique.

11. Système d'automatisation des bâtiments et de gestion des bâtiments, comprenant :
- au moins une prise électrique multifonction (2) selon l'une des revendications 1 à 10, et
- une unité de commande (34) pour la commutation, la commande en boucle ouverte et/ou la commande en boucle fermée, qui est raccordée par l'intermédiaire d'une troisième interface (32) à la prise électrique multifonction (2).

12. Système d'automatisation des bâtiments et de gestion des bâtiments selon la revendication 11, **caractérisé en ce que** l'unité de commande (34) comprend un moyen d' activation pour un processus de commutation sur marche d'une charge (4) qui est raccordée à la prise électrique multifonction (2).

13. Système d'automatisation des bâtiments et de gestion des bâtiments selon la revendication 11 ou 12, **caractérisé en ce que** l'unité de commande (34) comprend un moyen d' activation pour un processus de commutation sur marche temporisée de la charge (4) qui est raccordée à la prise électrique multifonction.

14. Système d'automatisation des bâtiments et de gestion des bâtiments selon la revendication 13, **caractérisé en ce que** l'heure pour le processus de commutation sur marche temporisée d'une charge (4) peut être calculée sur la base de tarifs de l'électricité variant en fonction de l'heure.

15. Système d'automatisation des bâtiments et de gestion des bâtiments selon l'une des revendications 12 à 14, **caractérisé en ce que** le moyen d'activation comprend un dispositif d'entrée et de sortie (36) par l'intermédiaire duquel la consommation instantanée ou totale de la charge (4) peut être consultée.
